# EUROPEAN PATENT APPLICATION

(11) **EP 4 848 463 A1**
(43) Date of publication of application: **02.12.2026**
(21) Application number: 26710413.1
(22) Date of filing: 03.02.2026
(51) Int. Cl.: H01M 50/543, H01M 50/548

(54) **BATTERY AND ELECTRIC APPARATUS**

(30) Priority: 02.04.2025 CN 202520623164 U
(71) Applicant: HUIZHOU EVE POWER CO., LTD, Huizhou, Guangdong 516039 (CN)
(72) Inventor: ZHAO, Fenfen, Huizhou, Guangdong 516039 (CN); SHU, Kuanjin, Huizhou, Guangdong 516039 (CN); CHEN, Pandong, Huizhou, Guangdong 516039 (CN)
(74) Representative: Zhu, Puxing
(86) International application number: PCT/CN2026/076787
(87) International publication number: WO 2026/208376

(57) **Abstract**

The present application provides a battery and an electrical device. The battery includes a casing, a terminal, an insulating member, and a gasket. The terminal is disposed at the casing. The insulating member is disposed between the terminal and the casing. The insulating member is configured to separate the terminal from the casing. The gasket is disposed between at least a part of the insulating member and the terminal. The battery of the present application is conducive to reducing a direct force on the insulating member, preventing the insulating member from being damaged, and improving structural stability of the insulating member.

## Description

This application claims priority to and the benefit of Chinese Patent Application No. 202520623164.3, filed on April 2, 2025, and the disclosure of which is incorporated herein by reference in its entirety.

### TECHNICAL FIELD

The present application relates to the field of battery technologies, and in particular, to a battery, and an electrical device.

### BACKGROUND

Batteries are widely used in fields such as energy storage systems, vehicles, and consumer electronics. A battery mainly includes structures such as a casing, a terminal, and a jelly roll.

### SUMMARY

In a battery of related art, an insulating member is generally disposed between a terminal and a casing to avoid direct contact between the terminal and the casing. However, during a process of assembling the battery, the insulating member is easily damaged.

In a first aspect, the present application provides a battery, including:
a casing;
a terminal disposed at the casing;
an insulating member disposed between the terminal and the casing, where the insulating member is configured to separate the terminal from the casing; and
a gasket disposed between at least a part of the insulating member and the terminal.

In a second aspect, the present application provides an electrical device, including the above-described battery.

### BENEFICIAL EFFECTS

According to the battery provided by the present application, the gasket is disposed between at least a part of the insulating member and the terminal, so that at least a part of the insulating member is not in direct contact with the terminal. During a process of assembling or using the battery, at least a part of an acting force of the terminal directly acts on the gasket rather than on the insulating member, thereby facilitating reducing a direct force on the insulating member, preventing the insulating member from being damaged, and improving structural stability of the insulating member.

### BRIEF DESCRIPTION OF THE DRAWINGS

FIG. 1 is a schematic view of a structure of a battery according to the embodiments of the present application.
FIG. 2 is a cross-sectional view of a battery according to the embodiments of the present application.
FIG. 3 is a schematic enlarged view of a partial structure at position A in FIG. 2 according to the embodiments of the present application.
FIG. 4 is a schematic enlarged view of a partial structure at position B in FIG. 2 according to the embodiments of the present application.
FIG. 5 is a first schematic view of a partial structure of a battery according to the embodiments of the present application.
FIG. 6 is a second schematic view of a partial structure of a battery according to the embodiments of the present application.

### DETAILED DESCRIPTION

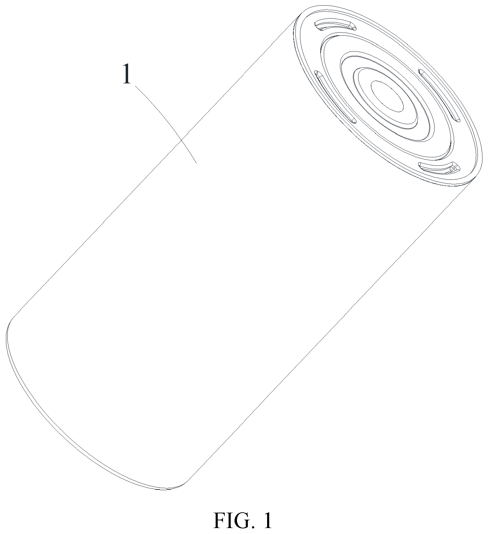

Embodiments of the present application disclose a battery. As shown in FIG. 1, FIG. 2, and FIG. 3, the battery includes a casing 1, a terminal 2, an insulating member 3, and a gasket 4. The terminal 2 is disposed at the casing 1. The insulating member 3 is disposed between the terminal 2 and the casing 1. The insulating member 3 is configured to separate the terminal 2 from the casing 1. The gasket 4 is disposed between at least a part of the insulating member 3 and the terminal 2.

According to the battery of the embodiments of the present application, the gasket 4 is disposed between at least a part of the insulating member 3 and the terminal 2, so that at least a part of the insulating member 3 is not in direct contact with the terminal 2. During a process of assembling or using the battery, at least a part of an acting force of the terminal 2 directly acts on the gasket 4 rather than on the insulating member 3, thereby facilitating reducing a direct force on the insulating member 3, preventing the insulating member 3 from being damaged, and improving structural stability of the insulating member 3.

When batteries in related art are assembled, the terminal 2 will be directly pressed against the insulating member 3. The terminal 2 is generally a metal member with relatively high structural strength, so that the insulating member 3 is easily damaged under direct pressing of the terminal 2. In the present application, the gasket 4 is disposed between at least a part of the insulating member 3 and the terminal 2, and a direct acting force of the terminal 2 on the insulating member 3 is reduced by using the gasket 4, so as to prevent the insulating member 3 from being damaged.

In some embodiments, a first end of the gasket 4 is connected to the terminal 2. A second end of the gasket 4 abuts against a surface of the insulating member 3. The second end of the gasket 4 extends along the surface of the insulating member 3 in a direction away from the terminal 2.

In this way, when the acting force of the terminal 2 is transmitted to the insulating member 3 through the gasket 4, since the second end of the gasket 4 extends along the surface of the insulating member 3, a contact area between the gasket 4 and the insulating member 3 is effectively increased, the acting force of the terminal 2 can be dispersed by the gasket 4, and the pressure on the insulating member 3 is reduced, thereby further effectively preventing the insulating member 3 from being damaged.

In some embodiments, the contact area between the gasket 4 and the insulating member 3 is smaller than a contact area between the gasket 4 and the terminal 2.

In this way, the contact area between the gasket 4 and the terminal 2 is greater than the contact area between the gasket 4 and the insulating member 3. The contact area between the gasket 4 and the terminal 2 may be regarded as an indirect contact area between the insulating member 3 and the terminal 2. That is, in this embodiment, the contact area between the insulating member 3 and the terminal 2 may be increased, so that the insulating member 3 may be effectively prevented from being crushed by the terminal 2.

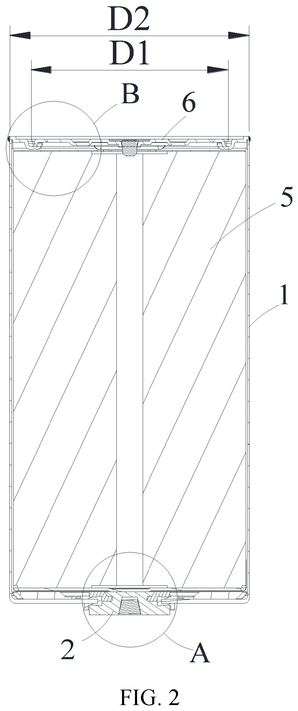

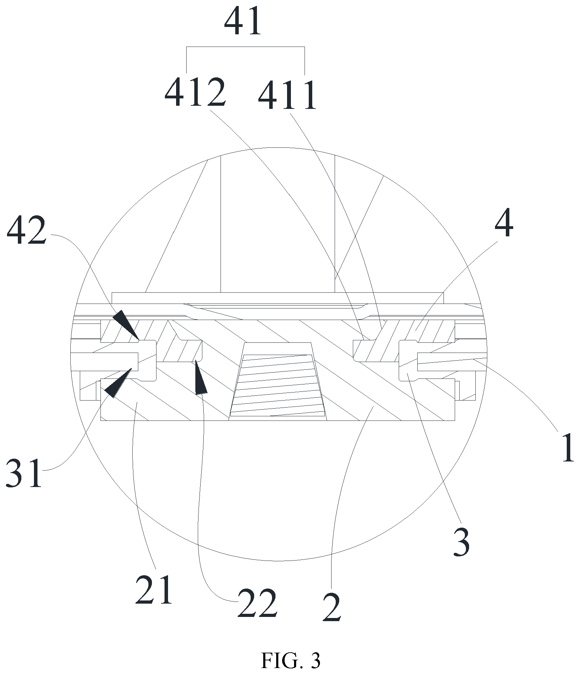

In some embodiments, as shown in FIG. 2 and FIG. 3, the gasket 4 includes a connection surface 41 abutting against the terminal 2. At least a part of the connection surface 41 is disposed obliquely relative to a circumferential direction of the casing 1.

In this way, the surface where the gasket 4 abuts against the terminal 2 is designed as an inclined surface, so that when the terminal 2 and the gasket 4 are connected, the terminal 2 can deform toward the inclined surface, thereby facilitating connection between the terminal 2 and the gasket 4.

In a case where the terminal 2 and the gasket 4 are connected by riveting, the obliquely disposed connection surface 41 facilitates deformation of the terminal 2, which is conducive to deformation or flow of a metal material of the terminal 2, so that the terminal 2 and the gasket 4 can be smoothly riveted together, thereby ensuring a riveting effect between the terminal 2 and the gasket 4.

In a case where the connection surface 41 of the gasket 4 abutting against the terminal 2 is not disposed obliquely, the terminal 2 is difficult to deform toward the gasket 4, thereby affecting the riveting effect between the gasket 4 and the terminal 2.

In some embodiments, as shown in FIG. 2 and FIG. 3, the connection surface 41 includes a first connection surface 411 and a second connection surface 412 connected in sequence. An included angle a is formed between the first connection surface 411 and the second connection surface 412, where 90°≤a≤180°.

In this way, an included angle space formed between the first connection surface 411 and the second connection surface 412 can be riveted to the terminal 2. During riveting, the terminal 2 can deform toward the included angle space, thereby ensuring the riveting effect between the terminal 2 and the gasket 4.

If the included angle between the first connection surface 411 and the second connection surface 412 is less than 90°, the terminal 2 is difficult to deform into the included angle space, so that the riveting effect between the terminal 2 and the gasket 4 is easily affected. If the included angle between the first connection surface 411 and the second connection surface 412 is greater than 180°, the gasket 4 is difficult to form riveting with the terminal 2, thereby affecting a connection effect between the terminal 2 and the gasket 4. As such, in the present application, the included angle between the first connection surface 411 and the second connection surface 412 is set between 90° and 180°.

In some examples, the connection surface 41 is formed on a side of the gasket 4 facing an internal space of the casing 1.

In some embodiments, as shown in FIG. 2 and FIG. 3, the gasket 4 is connected to the terminal 2. The terminal 2 includes a support portion 21. At least a part of the insulating member 3 is located between the support portion 21 and the gasket 4.

In this way, the gasket 4 is connected to the terminal 2, and the support portion 21 of the terminal 2 and the gasket 4 can cooperate to limit the insulating member 3, thereby realizing the fitted connection of the gasket 4, the terminal 2, and the insulating member 3.

A snap space may be formed between the support portion 21 of the terminal 2 and the gasket 4. At least a part of the insulating member 3 is snap-fitted in the snap space, so that the terminal 2, the insulating member 3, and the gasket 4 can be connected and fitted with each other to form an assembly.

In some embodiments, as shown in FIG. 2 and FIG. 3, the terminal 2 is formed with a first snap groove 22, and at least a part of the gasket 4 is snap-fitted in the first snap groove 22.

In this way, at least a part of the gasket 4 is snap-fitted in the first snap groove 22 of the terminal 2, so as to realize a snap connection between the gasket 4 and the terminal 2, thereby improving connection stability between the terminal 2 and the gasket 4.

In some embodiments, a connecting end of the gasket 4 is snap-fitted in the first snap groove 22. The connecting end of the gasket 4 is a bent structure. A shape of the connecting end of the gasket 4 is matched with the first snap groove 22. In this way, the first snap groove 22 is designed in the bent shape, so that the first snap groove 22 can be matched with the connecting end of the gasket 4. Both the gasket 4 and the first snap groove 22 are bent structures, which is conducive to improving snap-fitting stability between the gasket 4 and the first snap groove 22.

In some embodiments, as shown in FIG. 2 and FIG. 3, the gasket 4 is formed with a second snap groove 42, and the insulating member 3 is snap-fitted in the second snap groove 42.

In this way, the insulating member 3 is snap-fitted in the second snap groove 42 of the gasket 4 to realize the snap-connection between the gasket 4 and the insulating member 3, which is conducive to improving the connection stability and convenience between the gasket 4 and the insulating member 3.

In some embodiments, as shown in FIG. 2 and FIG. 3, the insulating member 3 is formed with a third snap groove 31, and the casing 1 is snap-fitted in the third snap groove 31.

In this way, the casing 1 is snap-fitted in the third snap groove 31 of the insulating member 3 to realize the snap-connection between the casing 1 and the insulating member 3, which is conducive to improving the connection stability and convenience between the insulating member 3 and the casing 1.

In some embodiments, the insulating member 3 is formed with a fourth snap groove, and the terminal 2 is snap-fitted in the fourth snap groove.

In this way, the terminal 2 is snap-fitted in the fourth snap groove of the insulating member 3, so as to realize snap-connection between the terminal 2 and the insulating member 3, thereby improving the connection stability and convenience between the terminal 2 and the insulating member 3.

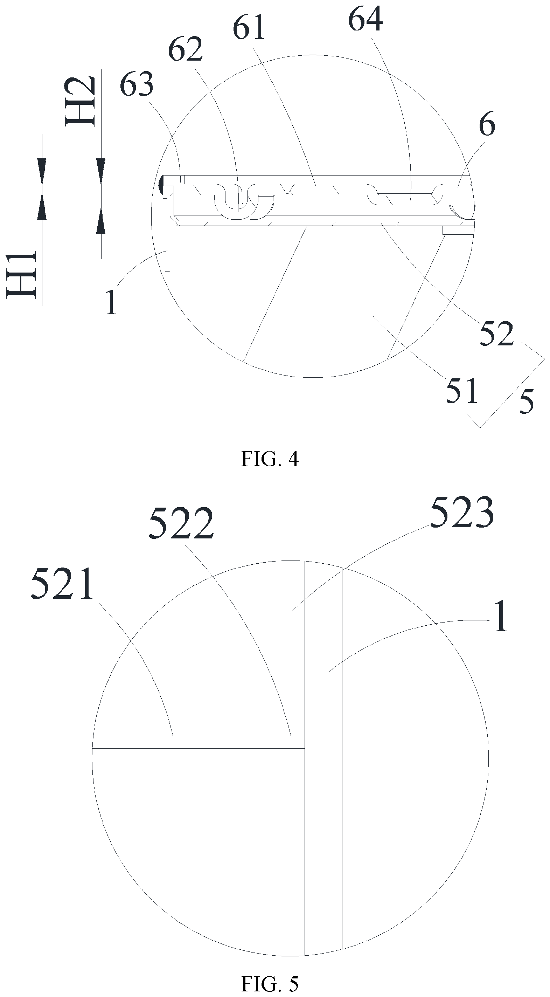

In some embodiments, as shown in FIG. 2 and FIG. 4, the battery further includes a jelly roll assembly 5 and a cover plate 6. The casing 1 is formed with a mounting cavity 11. The jelly roll assembly 5 is disposed in the mounting cavity 11. The cover plate 6 is connected to the casing 1. At least a part of the cover plate 6 protrudes into the mounting cavity 11 and abuts against the jelly roll assembly 5.

In this way, the cover plate 6 is connected to the casing 1, and a protruding structure of the cover plate 6 protrudes into the mounting cavity 11. Since the jelly roll assembly 5 is disposed in the mounting cavity 11, the protruding structure of the cover plate 6 abuts against the jelly roll assembly 5 in the mounting cavity 11, so as to limit the jelly roll assembly 5. That is, in the present application, the cover plate 6 can be used to limit and fix the jelly roll 51, so as to ensure mounting stability of the jelly roll assembly 5. Compared with the prior art where a rolling groove formed by the casing 1 is used to limit the jelly roll assembly 5, the casing 1 of the present application does not need to form the rolling groove, thereby avoiding a case that the casing 1 is stretched due to formation of the rolling groove, preventing a surface plating layer of the casing 1 from becoming thinner, and improving the performance of the battery.

In the battery of the related art, the jelly roll assembly 5 is mainly limited and fixed through the rolling groove formed by the casing 1, so that the casing 1 is easily stretched during the rolling groove forming, and the surface plating layer becomes thinner. In addition, since the rolling groove is generally formed at a sidewall of the casing 1, i.e., a certain distance is provided between the rolling groove and a top of the casing 1, so that a space where the jelly roll 51 can be arranged in the casing 1 is only a space between the rolling groove and the inner bottom wall of the casing 1, thereby limiting a height of the jelly roll 51. In the present application, at least a part of a structure of the cover plate 6 is disposed to protrude into the mounting cavity 11, so that the cover plate 6 can abut against the jelly roll assembly 5 to limit and fix the jelly roll assembly 5. In addition, the rolling groove structure of the casing 1 can be eliminated, thereby avoiding the case where the casing 1 is stretched due to formation of a rolling groove, preventing the surface plating layer of the casing 1 from becoming thinner, improving the performance of the battery, and further increasing a utilization rate of the internal space of the casing 1, which is conducive to increasing a height of the jelly roll assembly 5.

In some examples, the cover plate 6 is connected to an open end of the casing 1.

In some embodiments, as shown in FIG. 2 and FIG. 4, the jelly roll assembly 5 includes a jelly roll 51 and a current collecting disk 52. The current collecting disk 52 is connected to a side of the jelly roll 51 away from an inner bottom wall of the casing 1. At least a part of the cover plate 6 abuts against a side of the current collecting disk 52 away from the jelly roll 51.

In this way, the current collecting disk 52 is located between the cover plate 6 and the jelly roll 51. At least a part of the cover plate 6 abuts against the side of the current collecting disk 52 away from the jelly roll 51. The cover plate 6 cooperates with the inner bottom wall of the casing 1 to clamp the current collecting disk 52 and the jelly roll 51, thereby limiting and fixing the current collecting disk 52 and the jelly roll 51. Further, the casing 1 does not need to be formed with the rolling groove, thereby preventing the casing 1 from being stretched due to the formation of the rolling groove, preventing the surface plating layer of the casing 1 from becoming thinner, and improving the performance of the battery. In this way, the cover plate 6 can abut against the jelly roll assembly 5 to limit and fix the jelly roll assembly 5. In addition, the rolling groove structure of the casing 1 can be eliminated, thereby avoiding the case where the casing 1 is stretched due to the formation of the rolling groove, preventing the surface plating layer of the casing 1 from becoming thinner, improving the performance of the battery, and further increasing the utilization rate of the internal space of the casing 1, which is conducive to increasing the height of the jelly roll assembly 5.

In some embodiments, as shown in FIG. 2 and FIG. 4, the current collecting disk 52 includes a first connection section 521, a second connection section 522, and a third connection section 523 connected in sequence. The first connection section 521 is connected to a tab of the jelly roll 51. The third connection section 523 is connected to the casing 1.

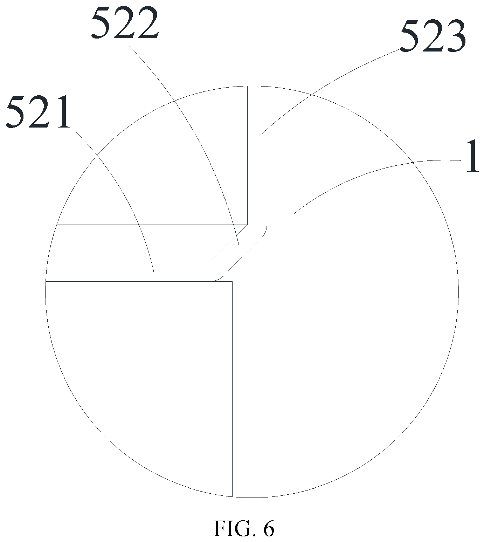

In some embodiments, as shown in FIG. 6, the second connection section 522 is spaced apart from the casing 1, so that a gap is formed between the second connection section 522 and the casing 1, which facilitates the arrangement of a sealing structure at the gap.

In some embodiments, as shown in FIG. 5, the second connection section 522 is attached to the casing, so as to ensure the connection stability between the current collecting disk 52 and the casing 1.

In some embodiments, as shown in FIG. 2 and FIG. 4, the cover plate 6 includes a main body portion 61, an inner recessed portion 62, and a connecting portion 63 connected in sequence. The connecting portion 63 is connected to the casing 1. The inner recessed portion 62 protrudes into the mounting cavity 11 relative to the main body portion 61. The inner recessed portion 62 abuts against the jelly roll assembly 5.

In this way, the connecting portion 63 is connected to the casing 1 to realize the connection between the cover plate 6 and the casing 1. The inner recessed portion 62 protrudes into the mounting cavity 11 relative to the main body portion 61. In the case where the connecting portion 63 is connected to the casing 1, the inner recessed portion 62 abuts against the jelly roll assembly 5, and the inner recessed portion 62 can limit and fix the jelly roll assembly 5. In this way, the cover plate 6 can abut against the jelly roll assembly 5 to limit and fix the jelly roll assembly 5. In addition, the rolling groove structure of the casing 1 can be eliminated, thereby avoiding the case where the casing 1 is stretched due to the formation of the rolling groove, preventing the surface plating layer of the casing 1 from becoming thinner, improving the performance of the battery, and further increasing the utilization rate of the internal space of the casing 1, which is conducive to increasing the height of the jelly roll assembly 5.

In some examples, a side of the casing 1 away from the inner bottom wall of the casing 1 is connected to the connecting portion 63.

In some examples, the inner recessed portion 62 is fixedly connected to the current collecting disk 52 by welding. Exemplarily, the welding is, e.g., laser welding. A welding method is, e.g., peripheral welding or local welding. It should be noted that a connection mode of the inner recessed portion 62 and the current collecting disk 52 is only illustrated herein, and is not particularly limited. For example, the inner recessed portion 62 may also be connected to the current collecting disk 52 by snap-fitting.

In some embodiments, along an axial direction of the casing 1, an area of an orthographic projection of the inner recessed portion 62 on the inner bottom wall of the casing 1 is S1, and an area of the cover plate 6 on a side away from the jelly roll 51 is S2, where 0.05≤S1/S2≤0.5.

It should be noted that the inner recessed portion 62 is configured to abut against the jelly roll assembly 5 to limit and fix the jelly roll assembly 5. If the ratio of S1 to S2 is less than 0.05, the area of the inner recessed portion 62 is small, and the inner recessed portion 62 is difficult to effectively abut against and limit the jelly roll assembly 5. If the ratio of S1 to S2 is greater than 0.5, the inner recessed portion 62 is easy to interfere with other structures of the battery, so the ratio of S1 to S2 is set between 0.05 and 0.5 in the present application.

In some embodiments, as shown in FIG. 2 and FIG. 4, the inner recessed portion 62 is an annular structure, a central diameter of the inner recessed portion 62 is D1, and an outer diameter of the cover plate 6 is D2, where 0.2≤D1/D2≤0.95.

It should be noted that if the ratio of the central diameter of the inner recessed portion 62 to the outer diameter of the cover plate 6 is less than 0.2, it indicates that the inner recessed portion 62 is too close to a center of the cover plate 6, so that the inner recessed portion 62 is easy to interfere with other structures of the battery. If the ratio of the central diameter of the inner recessed portion 62 to the outer diameter of the cover plate 6 is greater than 0.95, the inner recessed portion 62 is too close to an edge of the cover plate 6, so that the inner recessed portion 62 is easy to affect the structural stability of the cover plate 6. As such, in the present application, the ratio of the central diameter of the inner recessed portion 62 to the outer diameter of the cover plate 6 is set between 0.2 and 0.95.

In some embodiments, an R angle of a bottom of the inner recessed portion 62 is greater than 0.2 mm.

It should be noted that a stress concentration point will be formed at a bottom of a sharp groove, which is easy to cause cracks or even fractures when subjected to a load (especially a cyclic load or impact). The angle R of the bottom of the inner recessed portion 62 is set to be greater than 0.2 mm, which is beneficial to reduce stress concentration and improve the structural strength.

In some embodiments, as shown in FIG. 2 and FIG. 4, along the axial direction of the casing 1, a thickness of the main body portion 61 is H1, where 0.4 mm≤H1≤1.2 mm.

It should be noted that if the thickness of the main body portion 61 is less than 0.4 mm, a structural strength of the main body portion 61 is low. If the thickness of the main body portion 61 is greater than 1.2 mm, an overall size of the battery is greatly affected. As such, the thickness of the main body portion 61 is set between 0.4 mm and 1.2 mm in the present application.

In some embodiments, as shown in FIG. 2 and FIG. 4, along the axial direction of the casing 1, a height between the bottom of the inner recessed portion 62 and a side of the main body portion 61 away from the jelly roll assembly 5 is H2, where 1≤H2/H1≤4.5.

It should be noted that if the ratio of H2 to H1 is less than 1, it indicates that along the axial direction of the casing 1, a length of the inner recessed portion 62 protruding toward an inner side of the casing 1 is too short, and the inner recessed portion 62 is difficult to effectively limit and fix the jelly roll assembly 5. If the ratio of H2 to H1 is greater than 4.5, it indicates that along the axial direction of the casing 1, the length of the inner recessed portion 62 protruding toward the inner side of the casing 1 is excessively long, which easily has a great impact on the overall size of the battery. As such, the ratio of H2 to H1 is set between 1 and 4.5 in the present application.

In some embodiments, as shown in FIG. 2 and FIG. 4, the cover plate 6 further includes a reinforcing portion 64. An area of the reinforcing portion 64 on a side away from the jelly roll assembly 5 is S3, and an area of the cover plate 6 on a side away from the jelly roll assembly 5 is S2, where 0.05≤S3/S2≤0.5.

In this way, the reinforcing portion 64 can improve the structural strength of the cover plate 6.

It should be noted that if the ratio of S3 to S2 is less than 0.05, it is difficult for the reinforcing portion 64 to effectively reinforce the structure of the cover plate 6. If the ratio of S3 to S2 is greater than 0.5, the reinforcing portion 64 is easy to interfere with other structures. As such, the ratio of S3 to S2 is set between 0.05 and 0.5 in the present application.

In some embodiments, the reinforcing portion 64 includes a reinforcing groove formed in the cover plate 6. The reinforcing groove is communicated with the inner recessed portion 62. The area of the inner recessed portion 62 on the side away from the jelly roll assembly 5 is S1, where 0.05≤(S1+S3)/S2≤0.95.

It should be noted that if the ratio of (S1+S3) to S2 is less than 0.05, the inner recessed portion 62 is difficult to effectively limit and fix the jelly roll assembly 5, and the reinforcing portion 64 is difficult to effectively strengthen the structure of the cover plate 6. If the ratio of (S1+S3) to S2 is greater than 0.95, the reinforcing portion 64 and/or the inner recessed portion 62 easily interfere with other structures, so the ratio of (S1+S3) to S2 is set between 0.05 and 0.95 in the present application.

The embodiments of the present application further disclose an electrical device, including the above-described battery.

According to the electrical device of the embodiments of the present application, the gasket 4 is disposed between at least a part of the insulating member 3 and the terminal 2, so that at least a part of the insulating member 3 is not in direct contact with the terminal 2. During a process of assembling or using the battery, at least a part of an acting force of the terminal 2 directly acts on the gasket 4 instead of the insulating member 3, thereby facilitating reducing a direct force on the insulating member 3, preventing the insulating member 3 from being damaged, improving structural stability of the insulating member 3, further ensuring the stability of the battery, and allowing the electrical device to operate stably.

It should be noted that the electrical device may be a vehicle, an aircraft, or a household appliance. It should be noted that the foregoing is merely an example of the electrical device, and does not impose a special limitation on the electrical device.

## Claims

1. A battery, comprising:
a casing;
a terminal disposed at the casing;
an insulating member disposed between the terminal and the casing, wherein the insulating member is configured to separate the terminal from the casing; and
a gasket disposed between at least a part of the insulating member and the terminal.

2. The battery according to claim 1, wherein a first end of the gasket is connected to the terminal, a second end of the gasket abuts against a surface of the insulating member, and the second end of the gasket extends along the surface of the insulating member in a direction away from the terminal.

3. The battery according to claim 1, wherein the gasket comprises a connection surface abutting against the terminal, and at least a part of the connection surface is disposed obliquely relative to a circumferential direction of the casing.

4. The battery according to claim 3, wherein the connection surface comprises a first connection surface and a second connection surface connected in sequence, and an included angle a is formed between the first connection surface and the second connection surface, where 90°≤a≤180°.

5. The battery according to claim 1, wherein the gasket is connected to the terminal, the terminal comprises a support portion, and at least a part of the insulating member is located between the support portion and the gasket.

6. The battery according to claim 1, wherein the terminal is formed with a first snap groove, and at least a part of the gasket is snap-fitted in the first snap groove.

7. The battery according to claim 6, wherein a connecting end of the gasket is snap-fitted in the first snap groove, the connecting end of the gasket is a bent structure, and a shape of the connecting end of the gasket is matched with the first snap groove.

8. The battery according to claim 1, wherein the gasket is formed with a second snap groove, and the insulating member is snap-fitted in the second snap groove; and/or
wherein the insulating member is formed with a third snap groove, and the casing is snap-fitted in the third snap groove; and/or
wherein the insulating member is formed with a fourth snap groove, and the terminal is snap-fitted in the fourth snap groove.

9. The battery according to any one of claims 1 to 8, wherein the battery further comprises a jelly roll assembly and a cover plate, the casing is formed with a mounting cavity, the jelly roll assembly is disposed in the mounting cavity, the cover plate is connected to the casing, and at least a part of the cover plate protrudes into the mounting cavity and abuts against the jelly roll assembly.

10. The battery according to claim 9, wherein the jelly roll assembly comprises a jelly roll and a current collecting disk, the current collecting disk is connected to a side of the jelly roll away from an inner bottom wall of the casing, and at least a part of the cover plate abuts against a side of the current collecting disk away from the jelly roll.

11. The battery according to claim 9, wherein the cover plate comprises a main body portion, an inner recessed portion, and a connecting portion connected in sequence, the connecting portion is connected to the casing, the inner recessed portion protrudes into the mounting cavity relative to the main body portion, and the inner recessed portion abuts against the jelly roll assembly.

12. The battery according to claim 11, wherein along an axial direction of the casing, an area of an orthographic projection of the inner recessed portion on an inner bottom wall of the casing is S1, and an area of the cover plate on a side away from the jelly roll is S2, where 0.05≤S1/S2≤0.5; or
wherein the inner recessed portion is an annular structure, a central diameter of the inner recessed portion is D1, and an outer diameter of the cover plate is D2, where 0.2≤D1/D2≤0.95.

13. The battery according to claim 11, wherein a thickness of the main body portion is H1 along an axial direction of the casing, where 0.4 mm≤H1≤1.2 mm; and/or
wherein along the axial direction of the casing, a height between a bottom of the inner recessed portion and a side of the main body portion away from the jelly roll assembly is H2, where 1≤H2/H1≤4.5.

14. The battery according to claim 11, wherein the cover plate further comprises a reinforcing portion, an area of the reinforcing portion on a side away from the jelly roll assembly is S3, and an area of the cover plate on a side away from the jelly roll assembly is S2, where 0.05≤S3/S2≤0.5.

15. The battery according to claim 14, wherein the reinforcing portion comprises a reinforcing groove formed in the cover plate, the reinforcing groove is communicated with the inner recessed portion, and an area of the inner recessed portion on a side away from the jelly roll assembly is S1, where 0.05≤(S1+S3)/S2 ≤0.95.

16. An electrical device, comprising the battery according to any one of claims 1 to 15.
